# EUROPEAN PATENT APPLICATION

(11) **EP 1 633 036 A1**
(43) Date of publication of application: **08.03.2006**
(21) Application number: 05107976.2
(22) Date of filing: 31.08.2005
(51) Int. Cl.: H02K 16/02, H02K 17/04

(54) **Single phase induction motor**

(30) Priority: 07.09.2004 KR 2004071258
(71) Applicant: LG Electronics Inc., Yongdungpo-gu Seoul (KR)
(72) Inventor: Han, Seung-Do, Namdong-Gu, Incheon (KR); Shin, Hyoun-Jeong, Namdong-Gu, Incheon (KR); Ahn, Jae-Hong, Anyang, Gyeonggi-Do (KR)
(74) Representative: Gille Hrabal Struck Neidlein Prop Roos

(57) **Abstract**

A single phase induction motor includes a stator, an induction cage rotor rotatably installed in a center portion of the stator and having a shaft fixed at its center; and a permanent magnet freely rotatably installed between the stator and the induction cage rotor and having a first magnetization portion and a second magnetization portion.

## Description

### BACKGROUND OF THE INVENTION

### 1. Field of the Invention

The present invention relates to a single phase induction motor, and particularly, to a single phase induction motor capable of reducing starting torque of a motor and varying a rotating speed of an induction cage rotor.

### 2. Description of the Background Art

In general, a motor is a device for converting electric energy to mechanical energy, and may be divided into a DC motor and an AC motor according to power being used. As the AC motors, there are an induction motor, a synchronous motor, a commutator motor and the like.

The induction motor has a structure where a permanent magnet rotor is freely rotatably installed at a clearance between a stator and an induction cage rotor. The induction motor is driven such that, when the permanent magnet rotor is rotated at a synchronous speed by a rotating magnetic field of the stator, the induction cage rotor is rotated by a strong magnetic flux generated at the permanent magnetic rotor.

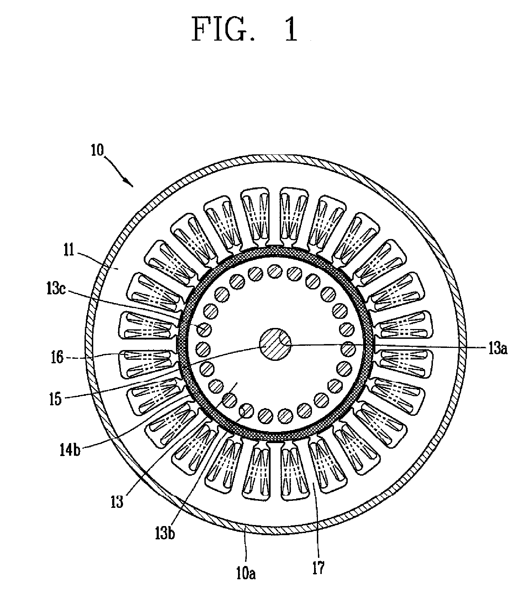

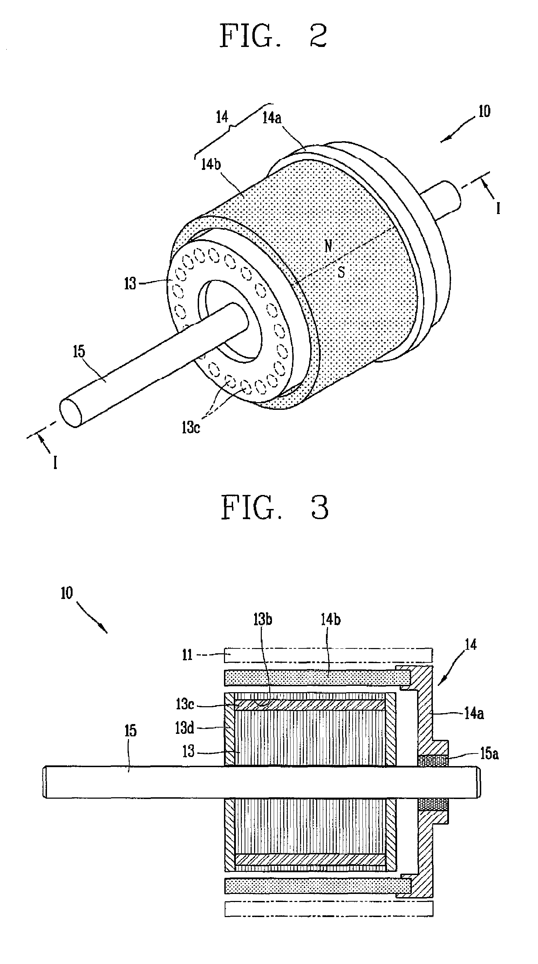

Figure 1 is a front view which illustrates a conventional single phase induction motor, Figure 2 is a perspective view which illustrates a permanent magnet rotor and an induction cage rotor in the conventional single phase induction motor, and Figure 3 is a longitudinal sectional view which illustrates the permanent magnet rotor and the induction cage rotor in the conventional single phase induction motor.

As shown, the conventional single phase induction motor 10 includes a stator 11 fixedly installed inside a casing 10a, an induction cage rotor 13 rotatably installed in a center portion of the stator 11, a permanent magnet rotor 14 freely rotatably installed between the stator 11 and the induction cage rotor 13, and a shaft 15 fixed at the center of the induction cage rotor 13.

A coil winding portion 17 around which a stator coil 16 winds is formed at one side of the stator 11 so that the stator 11 has a polarity of the N pole or the S pole.

A shaft hole 13a is formed at the center of the induction cage rotor 13, where the shaft 15 is fixed, and a plurality of conductor holes 13b are formed at an outer edge portion of the rotor 13 along a circumferential direction at regular intervals. Each conductor bar 13c is formed in each conductor hole 13b, and an end ring 13d is formed at an end portion of the conductor bar 13c.

The permanent magnet rotor 14 includes a frame 14a, wherein the shaft 15 is rotatably coupled to its center, and a permanent magnet 14b coupled to an end portion of the frame 14a along a circumferential direction and rotating the induction cage rotor 13 by being rotated by a rotating magnetic field of the stator 11. A shaft bearing 15a is provided at a center portion of the frame 14a.

The operation of the conventional induction motor having such a structure will now be described.

When a voltage is applied to the stator coil 16, the stator coil 16 generates a rotating magnetic field.

Here, the stator 11 generates a rotating magnetic field by the rotating magnetic field generated by a rotating magnetic field of the stator coil 16.

The rotating magnetic field of the stator 11 is transferred to the permanent magnet rotor 14, thereby rotating the permanent magnetic rotor 14. Here, when the permanent magnet rotor 14 is freely rotated, generating a rotating magnetic field having a strong flux, the induction cage rotor 13 is rotated by the rotating magnetic field generated by the free rotation of the permanent magnetic rotor 14.

However, because power consumption is fixed and the motor should be started within a range of the fixed power consumption, the conventional induction motor is problematic in that the starting performance is degraded and a speed of the induction cage rotor cannot be varied.

### BREIF DESCRIPTION OF THE INVENTION

Therefore, an object of the present invention is to provide a single phase induction motor capable of improving efficiency of a motor and also improving starting performance while lowering a minimum voltage required for starting of a permanent magnet rotor and improving.

Another object of the present invention is to provide a single phase induction motor capable of varying a rotating speed of an induction cage rotor.

To achieve these and other advantages and in accordance with the purpose of the present invention, as embodied and broadly described herein, there is provided a single phase induction motor comprising: a stator fixedly installed inside a casing; an induction cage rotor rotatably installed in a center portion of the stator 11 of the stator and having a shaft fixed at its center; and a permanent magnet freely rotatably installed between the stator and the induction cage rotor and having a first magnetization portion and a second magnetization portion.

The first magnetization portion is formed parallel to the shaft and the second magnetization portion is formed to be inclined with respect to the shaft.

The permanent magnet rotor comprises: a frame having a shaft rotatably coupled to its center; and a permanent magnet coupled to an end portion of the frame along a circumferential direction and rotating the induction cage rotor while rotating along a magnetic field of the stator.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a unit of this specification, illustrate embodiments of the invention and together with the description serve to explain the principles of the invention.

In the drawings:
Figure 1 is a front view which illustrates a conventional single phase induction motor;
Figure 2 is a perspective view which illustrates a permanent magnetic rotor and an induction cage rotor of the conventional single phase induction motor;
Figure 3 is a sectional view taken along line |-| of Figure 2;
Figure 4 is a front view which illustrates a single phase induction motor in accordance with the present invention;
Figure 5 is a perspective view which illustrates the single phase induction motor in accordance with the present invention;
Figure 6 is a sectional view taken along line ||-|| of Figure 5;
Figure 7 is a graph which illustrates an acceleration characteristic of the single phase induction motor at the time of starting in accordance with the present invention;
Figure 8 is an operational view for explaining high-speed operation when a high voltage is applied to the single phase induction motor in accordance with the present invention after its initiation;
Figure 9 is an operational view for explaining low-speed operation when a low voltage is applied to the single phase induction motor in accordance with the present invention after its initiation.

### DETAILED DESCRIPTION OF THE PREFERRED EMBODIMENTS

Reference will now be made in detail to the preferred embodiments of the present invention, examples of which are illustrated in the accompanying drawings.

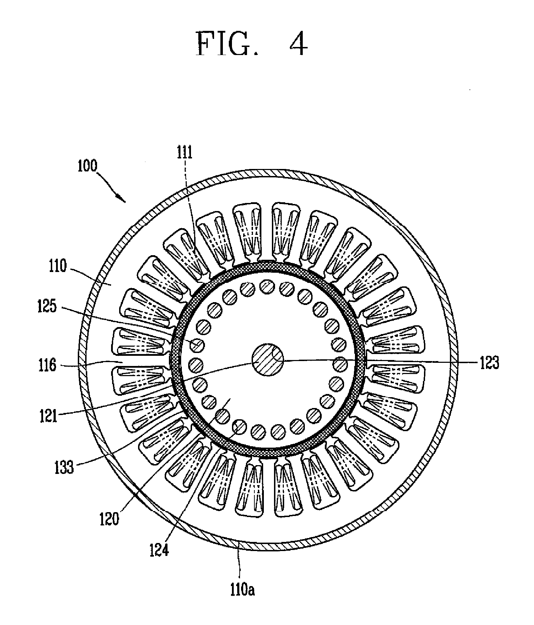

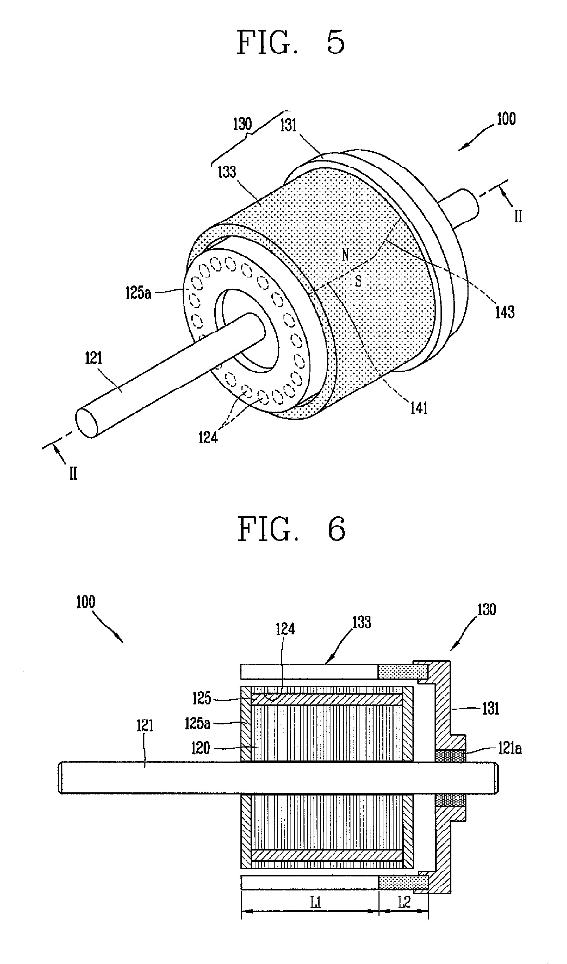

Figure 4 is a front view which illustrates a single phase induction motor in accordance with the present invention, Figure 5 is a perspective view which illustrates the single phase induction motor in accordance with the present invention, and Figure 6 is a sectional view taken along line ||-|| of Figure 5.

As shown, the single phase induction motor 100 in accordance with the present invention includes a stator 110 fixedly installed inside a casing 110a, an induction cage rotor 120 rotatably installed in a center portion of the stator 110 and having a shaft 121 fixed at its center, and a permanent magnet rotor 130 freely rotatably installed between the stator 110 and the induction cage rotor 120.

A coil winding portion 116 around which a stator coil 111 winds is formed at one side of the stator 110 so that the stator 110 has a polarity of the N pole or the S pole.

The induction cage rotor 120 includes a shaft hole 123 at its center, and the shaft 121 is fixed to the shaft hole 123. Also, a plurality of conductor holes 124 are formed at an outer edge portion of the induction cage rotor 120 along its circumference direction at regular intervals, and each conductor bar 125 is installed at each conductor 124.

Each conductor bar 125 is formed by die casting method and is generally made of aluminum. The conductor bar 125 may be formed of copper.

An end ring 125a of aluminum is formed at an end portion of each first conductor bar 125.

The permanent magnet rotor 130 includes a frame 131 having a shaft 121 rotatably coupled to its center, and a permanent magnet 135 having a cylindrical shape, coupled to an end portion of the frame 131 along its circumferential direction and rotating the induction cage rotor 120 by being rotated along a magnetic field of the stator 110.

Also, the permanent magnet rotor 130 is installed to be slidable in the direction of the shaft 121.

On the basis of the shaft 121, a first magnetization portion 141 and a second magnetization portion 143 are formed at one side of the permanent magnet 135 and the other side thereof corresponding to the one side, respectively.

The first magnetization portion 141 is formed parallel to the shaft 121 and the second magnetization portion 143 is inclined with respect to the shaft 121.

The frame 131 has a shaft bearing 121 a at its center portion to allow the smooth rotation of the shaft 121.

The operation of the single phase induction motor in accordance with the present invention will now be described.

When a voltage is applied to a stator coil 111, the stator 110 generates a rotating magnetic field by a rotating magnetic field generated by the rotating magnetic field generated by the stator coil 111.

The rotating magnetic field of the stator 110 is transferred to the permanent magnet 135 of the permanent magnet rotor 130, thereby freely rotating the permanent magnetic rotor 130. Here, the permanent magnet 135 of the permanent magnet rotor 130 is freely rotated with a synchronous speed, generating a rotating magnetic field having a strong magnetic flux. Thus, the rotating magnetic field generated by such free rotation of the permanent magnet 135 of the permanent magnet rotor 130 rotates an induction cage rotor 120. Accordingly, the induction cage rotor 120 can achieve high efficiency low noise operation.

Characteristics of acceleration in starting of the induction cage rotor will now be described.

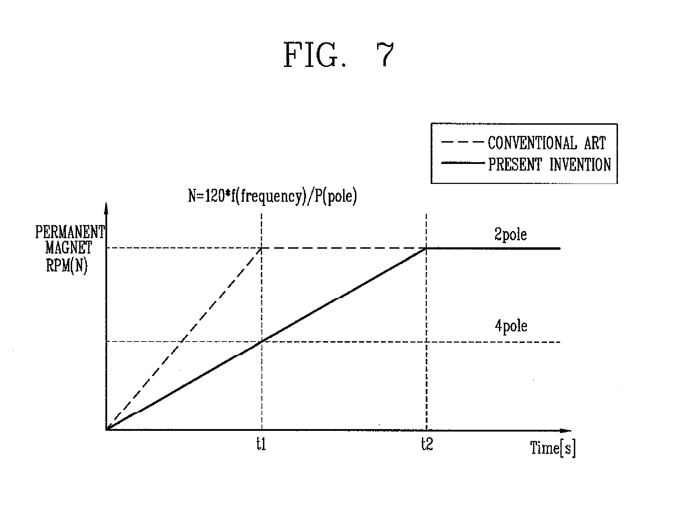

Figure 7 is a graph which illustrates an acceleration characteristic in starting of the single phase induction motor in accordance with the present invention.

In the graph of Figure 7, the starting time is on the x-axis, and the revolution of the permanent magnet rotor is on the y-axis.

As shown as a dotted line in the graph of Figure 7, in the conventional single-phase induction motor, it took a time as long as t₁ for the permanent magnet rotor to accelerate to 3600rpm, which is a normal revolution of the permanent magnet rotor, after starting.

In contrast, as shown as a solid line in the graph of Figure 7, in the single-phase induction motor in accordance with the present invention, it took a time as long as t₂, which is two times longer than t₁ of the conventional art, for the permanent magnet rotor to accelerate to 3600rpm, which is a normal revolution of the permanent magnet rotor, at the time of the starting.

This is because the inclined second magnetization portion 143 is further formed at the permanent magnet 133. Specifically, by the second magnetization portion 143, an effect of employing four poles is obtained although two poles are substantially used, thereby increasing the starting time. Thusly, the magnitude of starting torque can be reduced.

Accordingly, in the single-phase induction motor in accordance with the present invention, the induction cage rotor 120 is easily started even with a low starting voltage, thereby achieving high efficiency low noise operation and improving starting performance.

A process for a speed change of the motor will now be described.

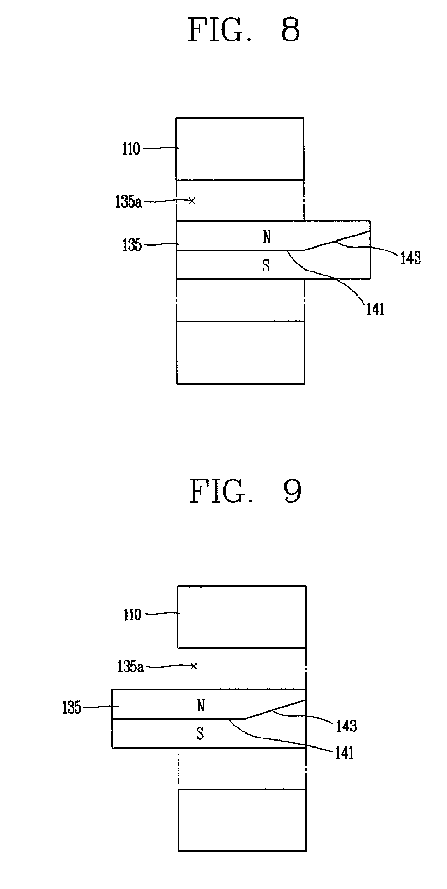

Figure 8 is a view for describing high speed operation at the time of high voltage application after starting of the single phase induction motor in accordance with the present invention, and Figure 9 is a view for describing low speed operation at the time of low voltage application after starting of the single phase induction motor in accordance with the present invention.

As shown in Figure 8, when a magnetomotive force of the stator 10 is increased as a high voltage is applied after starting, the first magnetization portion 141 which is longer than the second magnetization portion 143 in an axial direction is placed within a range 135a of a magnetic field of the stator 110, which is indicated as a dotted line. Thus, a coupling force between the permanent magnet 135 and the induction cage rotor 120 (see Figure 6) is increased, thereby rotating the induction cage rotor 120 at a high speed.

In contrast, as shown in Figure 9, when the magnetomotive force of the stator 110 is decreased as a low voltage is applied after starting, the second magnetization portion 143 which is shorter than the first magnetization portion 141 is placed within a range 135a of the magnetic field of the stator, which is indicated as a dotted line. Accordingly, a coupling force between the permanent magnet 135 and the induction cage rotor 120 (see Figure 6) is decreased, thereby rotating the induction cage rotor 120 at a low speed.

As described so far, a first magnetization portion which is parallel to a shaft and an inclined second magnetization portion are formed, such that revolutions of the induction cage rotor can be easily varied according to the magnitude of an external voltage, and noise can be reduced and a starting characteristics can be improved without efficiency degradation.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A single phase induction motor comprising:
a stator fixedly installed inside a casing;
an induction cage rotor rotatably installed in a center portion of the stator and having a shaft fixed at its center; and
a permanent magnet freely rotatably installed between the stator and the induction cage rotor and having a first magnetization portion and a second magnetization portion.

2. The single phase induction motor of claim 1, wherein the first magnetization portion is formed parallel to the shaft and the second magnetization portion is formed to be inclined with respect to the shaft.

3. The single phase induction motor of claim 1, wherein the permanent magnet has a cylindrical shape.

4. The single phase induction motor of claim 1, wherein the permanent magnet rotor comprises:
a frame having a shaft rotatably coupled to its center; and
a permanent magnet coupled to an end portion of the frame along a circumferential direction and rotating the induction cage rotor while rotating along a magnetic field of the stator.

5. The single phase induction motor of claim 1, wherein the frame includes a shaft bearing at its center portion.

6. The single phase induction motor of claim 1, wherein, when a high voltage is applied after starting, the first magnetization portion is placed within a range of a magnetic field of the stator, and when a low voltage is applied after starting, the second magnetization portion is placed within a range of a magnetic field of the stator.

7. A single phase induction motor comprising:
a stator;
an induction cage rotor rotatably installed in a center portion of the stator and having a shaft fixed at its center; and
a permanent magnet rotor including a frame having a shaft rotatably coupled to its center and a permanent magnet coupled to an end of the frame along a circumferential direction and having a first magnetization portion and a second magnetization portion.

8. The single phase induction motor of claim 7, wherein the first magnetization portion is formed parallel to the shaft, and the second magnetization portion is formed to be inclined with respect to the shaft.

9. The single phase induction motor of claim 7, wherein the permanent magnet has a cylindrical shape.

10. The single phase induction motor of claim 7, wherein, when a high voltage is applied after starting, the first magnetization portion is placed within a range of a magnetic field of the stator, and when a low voltage is applied after starting, the second magnetization portion is placed within a range of a magnetic field of the stator.
